# EUROPEAN PATENT SPECIFICATION

(11) **EP 3 455 095 B1**
(45) Date of publication and mention of the grant of the patent: **10.11.2021**
(21) Application number: 17797031.6
(22) Date of filing: 15.05.2017
(51) Int. Cl.: B60H 1/00, B60H 1/32, F25B 30/02

(54) **HEATING AND COOLING SYSTEMS AND METHODS FOR TRUCK CABS**
HEIZ- UND KÜHLSYSTEME UND VERFAHREN FÜR LKW-KABINEN
SYSTÈMES ET PROCÉDÉS DE CHAUFFAGE ET DE REFROIDISSEMENT POUR CABINES DE CAMION

(30) Priority: 13.05.2016 US 201662336497 P
(43) Date of publication of application: 20.03.2019
(73) Proprietor: Tiger Tool International, Incorporated, Abbotsford, BC V2S 7P1 (CA)
(72) Inventor: ANDREWS, Michael, Abbotsford, BC V2S 7P1 (CA)
(74) Representative: Boult Wade Tennant LLP
(86) International application number: PCT/US2017/032750
(87) International publication number: WO 2017/197407

(56) References cited:
- WO-A1-2018/009406
- SU-A3- 1 558 311
- US-A- 4 463 576
- US-A1- 2011 302 942
- US-A1- 2014 230 470
- US-B1- 6 460 356

## Description

### TECHNICAL FIELD

The present invention relates to systems and methods for heating and cooling the interior of a vehicle and, more particularly, to vehicle heating and cooling systems and methods that employ a heat pump.

### BACKGROUND

Utility power is typically made available as an AC power signal distributed from one or more centralized sources to end users over a power distribution network. However, utility power is unavailable for certain structures. For example, movable structures such as vehicles do not have access to utility power when moving and can be connected to power distribution network when parked only with difficulty. Similarly, remote structures such as cabins and military installations not near the utility power distribution network often cannot be practically powered using utility power.

DC power systems including batteries are often employed to provide power when utility power is unavailable. For example, trucks and boats typically employ a DC power system including a battery array to provide power at least to secondary vehicle electronics systems such as communications systems, navigation systems, ignition systems, heating and cooling systems, and the like. Shipping containers and remote cabins that operate using alternative primary power sources such as solar panels or generators also may include DC power systems including a battery or array of batteries to operate electronics systems when primary power is unavailable. Accordingly, most modern vehicles and remote structures use battery power sufficient to operate, at least for a limited period of time, electronics systems such as secondary vehicle electronics systems.

The capacity of a battery system used by a vehicle or remote structure is typically limited by factors such as size, weight, and cost. For example, a vehicle with an internal combustion engine may include a relatively small battery for use when the engine is not operating; a large battery array is impractical for vehicles with an internal combustion engine because the size of the batteries takes up valuable space and the weight of the batteries reduces vehicle efficiency when the vehicle is being moved by the engine. All electric vehicles have significantly greater battery capacity, but that battery capacity is often considered essential for the primary purpose of moving the vehicle, so the amount of battery capacity that can be dedicated to secondary vehicle electronics systems is limited. Battery systems employed by remote structures must be capable of providing power when the alternative power source is unavailable, but factors such as cost, size, and weight reduce the overall power storage capacity of such systems.

Heating and cooling systems have substantial energy requirements. Vehicles such as trucks or boats typically rely on the availability of the internal combustion engine when heating or cooling is required. The present invention is of primary significance in the context of a vehicle having an internal combustion engine.

When heating or cooling is required when the vehicle is parked or the boat is moored for more than a couple of minutes, the internal combustion engine will be operated in an idle mode solely to provide power to the heating and cooling system. Engine idling is inefficient and creates unnecessary pollution, and anti-idling laws are being enacted to prevent the use of idling engines, especially in congested environments like cities, truck stops, and harbors. For remote structures such as cabins or shipping containers, heating and cooling systems can be a major draw on battery power. Typically, an alternative or inferior heating or cooling source such as a wood burning stove, fans, or the like are used instead of a DC powered heating and cooling system.

The need thus exists for auxiliary heating and cooling systems that use battery power in vehicles having internal combustion engines.
US 2014/230470 A1 discloses a system for reducing idle time in service vehicles such as police patrol cars.

### SUMMARY

The present invention may be embodied as a vehicle heating and cooling system according to claim 1.

The present invention may also be embodied as a method of heating and cooling a vehicle according to claim 11.

An example heating and cooling system for a vehicle is provided comprising an internal combustion engine. The heating and cooling system comprises a vehicle battery, a vehicle evaporator coil, a vehicle HVAC user interface, an auxiliary battery, a compressor, a compressor coil, a vehicle charging system, and a control system. The vehicle charging system is operatively connected to the internal combustion engine. The control system is configured to operatively connect at least one of the vehicle battery, the auxiliary battery, and the vehicle charging system to the compressor. The compressor and compressor coil are connected to the vehicle evaporator coil. The compressor is not mechanically connected to the vehicle internal combustion engine. However, this example is not part of the claimed invention.

### BRIEF DESCRIPTION OF THE DRAWINGS

Figure 1 is a schematic view of a first example vehicle heating and cooling system of the present invention; and
Figure 2 is a schematic view of a second example vehicle heating and cooling system , which however is not part of the present invention.

### DETAILED DESCRIPTION

The present invention may be embodied in a number of different example configurations, and several examples of vehicle heating and cooling systems constructed in accordance with, and embodying, the principles of the present invention will be described separately below.

### I. First Example Auxiliary Heating and Cooling System

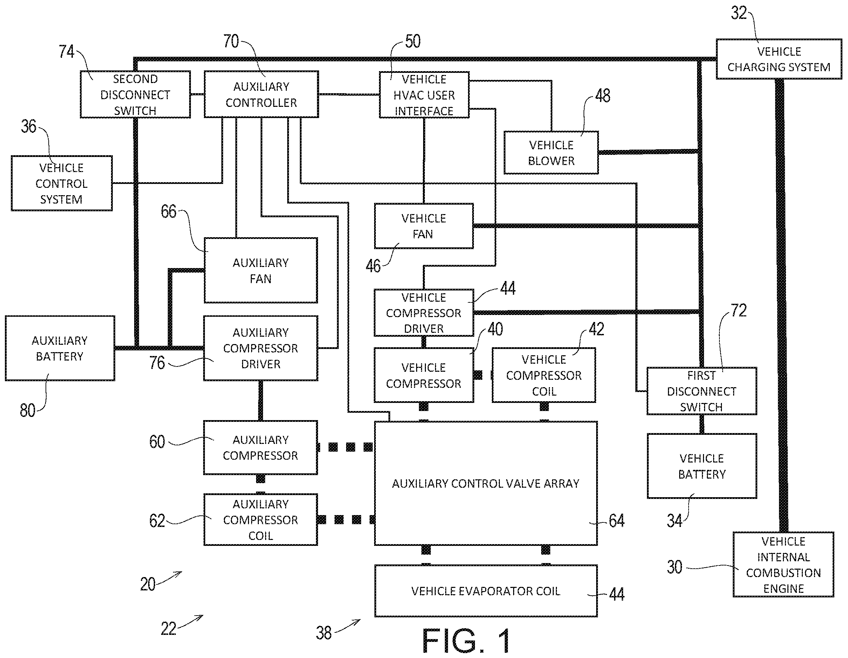

Referring initially to Figure 1 of the drawing, depicted therein is a first example auxiliary vehicle heating and cooling system 20 of the present invention. As will be described in further detail below, the first example auxiliary vehicle heating and cooling system 20 is intended to augment a factory vehicle heating and cooling system.

The first example auxiliary vehicle heating and cooling system 20 is configured to be used in conjunction with a vehicle 22. In this application, the term "vehicle" refers to a movable structure (whether moving or stationary) having an internal combustion engine that drives an alternator to provide DC power to an on board electronics systems. Examples of vehicles include trucks, automobiles, shipping containers, and boats.

The example vehicle 22 is or may be conventional and comprises an internal combustion engine 30, a vehicle charging system 32, a vehicle battery 34, a vehicle control system 36, and a vehicle HVAC system 38. The example internal combustion system 30, vehicle charging system 32, vehicle battery 34, and vehicle control system 36 are or may be conventional and will not be described herein beyond what is helpful for a complete understanding of the present invention.

The example vehicle HVAC system 38 comprises a vehicle compressor 40, a vehicle compressor coil 42, and a vehicle evaporator coil 44 that may be configured to form a heat pump. The term "compressor coil" is used herein to refer to the condenser coil of a heat pump system as described herein, and the terms "condenser coil" and "compressor coil" may be used interchangeably in the present application. The vehicle compressor coil 42 is arranged to exchange heat with ambient air outside of the AC region to be heated or cooled (e.g, cabin or sleeper unit), and a vehicle fan 46 is associated with the example vehicle compressor coil 42. The vehicle evaporator coil 44 is arranged to exchange heat with air within the AC region, and a vehicle blower 48 is associated with the vehicle evaporator coil 44.

The example vehicle HVAC system 38 further comprises a vehicle HVAC user interface 50 arranged to allow an occupant of the AC region to control the vehicle HVAC system 38. The example HVAC user interface 50 may be implemented using mechanical or electromechanical interface objects such as switches, buttons, sliders, or the like and/or by electronic interface objects such as switches, buttons, touch screens, or the like. The example HVAC user interface system 50 may be implemented with or without a thermostat capable of detecting temperature within the AC region and controlling operation of the various components of the vehicle HVAC system 38 to maintain temperature within the AC region based on a desired temperature. Optionally, a vehicle compressor driver 52 may be used to facilitate operation of the vehicle compressor 40 by the vehicle HVAC user interface.

The first example auxiliary HVAC system 20 is configured to integrate with at least a portion of the vehicle HVAC system 38 and comprises an auxiliary compressor 60, an auxiliary compressor coil 62, and an auxiliary control valve array 64. The auxiliary control valve array 64 may be configured to connect the auxiliary compressor 60 and an auxiliary compressor coil 62 to the vehicle evaporator coil 44 to form a heat pump. The auxiliary compressor coil 62 is arranged to exchange heat with ambient air outside of the AC region, and an auxiliary fan 66 is associated with the example auxiliary compressor coil 62.

The example auxiliary HVAC system 20 further comprises an auxiliary controller 70, a first disconnect switch 72, and a second disconnect switch 74. The example auxiliary controller 70 is arranged to control the components of the auxiliary HVAC system 20 based on control settings of the vehicle HVAC user interface 50. Optionally, an auxiliary compressor driver 76 may be used to facilitate operation of the auxiliary compressor 60 by the auxiliary controller 70.

The example auxiliary HVAC system 20 further comprises an auxiliary battery system 80 comprising one or more batteries and associated circuitry and wiring.

The example auxiliary HVAC system 20 operates in at least one of a vehicle mode and an auxiliary mode as determined by the vehicle control system 36.

In the vehicle mode, the first disconnect switch 72 is closed to allow power to flow from the vehicle battery 34 to the vehicle compressor 40, vehicle fan 46, and vehicle blower 48. In the vehicle mode, the auxiliary control valve array 64 is configured to connect the vehicle compressor 40 and vehicle compressor coil 42 to the vehicle evaporator coil 44 and disconnect the auxiliary compressor 60 and auxiliary compressor coil 62 from the vehicle evaporator coil 44. The AC region is heated and cooled using the vehicle HVAC system 38 in the vehicle mode. The second disconnect switch 74 is closed to allow the vehicle charging system 32 to charge the auxiliary battery 80. In the vehicle mode, the vehicle HVAC user interface 50 controls the vehicle compressor 40 through the vehicle compressor driver 52, the vehicle fan 46, and the vehicle blower 48.

In the auxiliary mode, the first disconnect switch 72 is opened to prevent power from flowing from the vehicle battery 34 to the auxiliary HVAC system 20. When the HVAC system 20 is in the auxiliary mode, the auxiliary control valve array 64 is arranged to disconnect the vehicle compressor 40 and vehicle compressor coil 42 from the vehicle evaporator coil 44 and connect the auxiliary compressor 60 and auxiliary compressor coil 62 to the vehicle evaporator coil 44. The AC region is heated and cooled using the auxiliary HVAC system 20 in the auxiliary mode. The second disconnect switch 74 is opened to disconnect the auxiliary battery 80 from the vehicle charging system 32 and vehicle battery 34 to prevent draining of the vehicle battery 34 in the auxiliary mode.

In the auxiliary mode, the auxiliary controller 70 controls the auxiliary compressor 60 through the auxiliary compressor driver 76, and the auxiliary fan 66 based on user inputs to the vehicle HVAC user interface 50. The auxiliary controller 70 converts signals generated by the HVAC user interface 50 into control signals appropriate for the components of the auxiliary HVAC system 20. The auxiliary controller 70 may further comprise an on/off switch accessible by the user and one or more of a temperature sensor and a pressure sensor capable of sensing temperatures (e.g., temperature of AC region) and pressures (e.g., pressure within auxiliary HVAC system 20) necessary to ensure proper operation of the auxiliary HVAC system 20.

### II. Second Example Auxiliary Heating and Cooling System

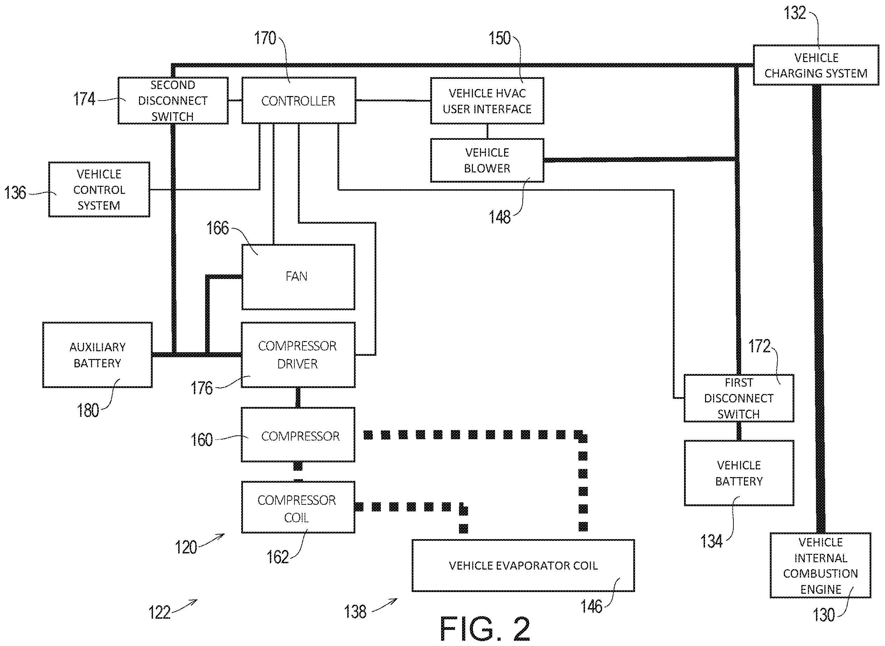

Referring now to Figure 2 of the drawing, depicted therein is a second example auxiliary vehicle heating and cooling system 120 , which is not part of the present invention. As will be described in further detail below, the second example vehicle heating and cooling system 120 is intended to augment a factory vehicle heating and cooling system.

The second example vehicle heating and cooling system 120 is configured to be used in conjunction with a vehicle 122. In this application, the term "vehicle" refers to a movable structure (whether moving or stationary) having an internal combustion engine that drives an alternator to provide DC power to an on board electronics systems. Examples of vehicles include trucks, automobiles, shipping containers, and boats.

The example vehicle 122 is or may be conventional and comprises an internal combustion engine 130, a vehicle charging system 132, a vehicle battery 134, a vehicle control system 136, and a vehicle HVAC system 138. The example internal combustion system 130, vehicle charging system 132, vehicle battery 134, and vehicle control system 136 are or may be conventional and will not be described herein beyond what is helpful for a complete understanding of the present invention.

The example vehicle HVAC system 138 comprises a vehicle evaporator coil 146. The vehicle evaporator coil 146 is arranged to exchange heat with air within the AC region, and a vehicle blower 148 is associated with the vehicle evaporator coil 146.

The example vehicle HVAC system 138 further comprises a vehicle HVAC user interface 150 arranged to allow an occupant of the AC region to control the vehicle HVAC system 138. The example HVAC user interface 150 may be implemented using mechanical or electromechanical interface objects such as switches, buttons, sliders, or the like and/or by electronic interface objects such as switches, buttons, touch screens or the like. The example HVAC user interface system 150 may be implemented with or without a thermostat capable of detecting temperature within the AC region and controlling operation of the various components of the vehicle HVAC system 138 to maintain temperature within the AC region based on a desired temperature.

The second example HVAC system 120 is configured to integrate with at least a portion of the vehicle HVAC system 138 and comprises a compressor 160 and a compressor coil 162 connected to the vehicle evaporator coil 146 to form a heat pump. The compressor coil 162 is arranged to exchange heat with ambient air outside of the AC region, and a fan 166 is associated with the example compressor coil 162.

The example HVAC system 120 further comprises a controller 170, a first disconnect switch 172, and a second disconnect switch 174. The example controller 170 is arranged to control the components of the HVAC system 120 based on control settings of the vehicle HVAC user interface 150. Optionally, an compressor driver 176 may be used to facilitate operation of the compressor 160 by the controller 170.

The example HVAC system 120 further comprises an auxiliary battery system 180 comprising one or more batteries and associated circuitry and wiring.

The example HVAC system 120 operates in at least one of a vehicle mode and an auxiliary mode as determined by the vehicle control system 136.

In the vehicle mode, the second disconnect switch 174 is closed to allow the vehicle charging system 132 to charge the auxiliary battery 180.

In the auxiliary mode, the first disconnect switch 172 is opened to prevent power from flowing from the vehicle battery 134 to the HVAC system 120. When the HVAC system 120 is in the auxiliary mode, the compressor 160 and compressor coil 162 are connected to the vehicle evaporator coil 146, and the AC region is heated and cooled using the HVAC system 120. The second disconnect switch 174 is opened to disconnect the auxiliary battery 180 from the vehicle charging system 132 and vehicle battery 134 to prevent draining of the vehicle battery 134 in the auxiliary mode.

In the auxiliary mode, the controller 170 controls the compressor 160 through the compressor driver 176, the fan 166 based on user inputs to the vehicle HVAC user interface 150. The controller 170 converts signals generated by the HVAC user interface 150 into control signals appropriate for the components of the HVAC system 120. The controller 170 may further comprise an on/off switch accessible by the user and one or more of a temperature sensor and a pressure sensor capable of sensing temperatures (e.g., temperature of AC region) and pressures (e.g., pressure within HVAC system 120) necessary to ensure proper operation of the HVAC system 120.

## Claims

1. A vehicle heating and cooling system (20) comprising:
a vehicle evaporator coil (44);
a vehicle HVAC user interface (50);
an auxiliary compressor (60);
an auxiliary compressor coil (62);
a vehicle compressor (40);
a vehicle compressor coil (42); and
a control valve array (64); and
a controller (70) connected between the vehicle HVAC user interface (50) and the auxiliary compressor (60),
wherein:
the auxiliary compressor (60) and auxiliary compressor coil (62) are connected to the vehicle evaporator coil (44) in an auxiliary mode; and
the vehicle compressor (40) and vehicle compressor coil (42) are connected to the vehicle evaporator coil (44) in a vehicle mode.

2. A vehicle heating and cooling system (20) as recited in claim 1, further comprising a vehicle internal combustion engine (30), where the auxiliary compressor (60) is not mechanically connected to the vehicle internal combustion engine (30).

3. A vehicle heating and cooling system (20) as recited in claim 1, further comprising:
a vehicle battery (34); and
a control system (36) configured to operatively connect the vehicle battery (34) to the auxiliary compressor (60).

4. A vehicle heating and cooling system (20) as recited in claim 1, further comprising:
an auxiliary battery (80); and
a control system (36) configured to operatively connect the auxiliary battery (80) to the auxiliary compressor (60).

5. A vehicle heating and cooling system (20) as recited in claim 1, further comprising:
a vehicle battery (34);
an auxiliary battery (80); and
a control system (36) configured to operatively connect at least one of the vehicle battery (34) and the auxiliary battery (80) to the auxiliary compressor (60).

6. A vehicle heating and cooling system (20) as recited in claim 5, in which the control system (36) comprises a disconnect switch (74) configured to disconnect the vehicle battery (34) from the auxiliary battery (80).

7. A vehicle heating and cooling system (20) as recited in claim 3, in which:
the vehicle heating and cooling system (20) further comprises a vehicle charging system (32) operatively connected to a vehicle internal combustion engine (30); and
the vehicle battery (34) is operably connected to the vehicle charging system (32).

8. A vehicle heating and cooling system (20) as recited in claim 4, in which:
the vehicle heating and cooling system (20) further comprises a vehicle charging system (32) operatively connected to a vehicle internal combustion engine (30); and
the auxiliary battery (80) is operably connected to the vehicle charging system (32).

9. A vehicle heating and cooling system (20) as recited in claim 5, in which:
the vehicle heating and cooling system (20) further comprises a vehicle charging system (32) operatively connected to a vehicle internal combustion engine (30); and
the vehicle battery (34) and auxiliary battery (80) are operably connected to the vehicle charging system (32).

10. A vehicle heating and cooling system (20) as recited in claim 9, further comprising:
a first disconnect switch (72) configured to disconnect the vehicle battery (34) from the vehicle charging system (32); and
a second disconnect switch (74) configured to disconnect the auxiliary battery (80) from the vehicle charging system (32).

11. A method of heating and cooling a vehicle (22) comprising the steps of:
connecting a controller (70) between a vehicle HVAC user interface (50) and an auxiliary compressor (60); and
arranging a control valve array (64) to:
connect the auxiliary compressor (60) and an auxiliary compressor coil (62) to s vehicle evaporator coil (44) in an auxiliary mode; and
connect a vehicle compressor (40) and vehicle compressor coil (42) to the vehicle evaporator coil (44) in a vehicle mode.

12. A method as recited in claim 11, further comprising the step of operatively connecting the auxiliary compressor (60) to a battery (34, 80) such that the auxiliary compressor (60) is not mechanically connected to a vehicle internal combustion engine (30).

13. A method as recited in claim 11, further comprising the step of operatively connecting at least one of a vehicle battery (34) and an auxiliary battery (80) to the auxiliary compressor (60).

14. A method as recited in claim 13, further comprising the steps of:
operably connecting a vehicle charging system (32) to a vehicle internal combustion engine (30); and
operably connecting the auxiliary battery (80) to the vehicle charging system (32).

## Patentansprüche

1. Fahrzeug-Heiz- und Kühlsystem (20) mit:
einer Fahrzeug-Verdampferschlange (44);
einer Fahrzeug-HVAC-Benutzerschnittstelle (50);
einem Zusatzverdichter (60);
einer Zusatzverdichterschlange (62);
einem Fahrzeugverdichter (40);
einer Fahrzeugverdichterschlange (42); und
einer Steuerventilanordnung (64); und
einem Steuergerät (70), das zwischen der Fahrzeug-HVAC-Benutzerschnittstelle (50) und dem Zusatzverdichter (60) angeschlossen ist, wobei:
in einem Zusatzmodus der Zusatzverdichter (60) und die Zusatzverdichterschlange (62) mit der Fahrzeugverdampferschlange (44) verbunden sind; und
in einem Fahrzeugmodus der Fahrzeugverdichter (40) und die Fahrzeugverdichterschlange (42) mit der Fahrzeugverdampferschlange (44) verbunden sind.

2. Fahrzeug-Heiz- und Kühlsystem (20) nach Anspruch 1, das ferner einen Fahrzeug-Verbrennungsmotor (30) umfasst, wobei der Zusatzverdichter (60) mit dem Fahrzeug-Verbrennungsmotor (30) nicht mechanisch verbunden ist.

3. Fahrzeugheiz- und -kühlsystem (20) nach Anspruch 1, ferner mit:
einer Fahrzeugbatterie (34); und
einem Steuerungssystem (36), das konfiguriert ist, um die Fahrzeugbatterie (34) mit dem Zusatzverdichter (60) operativ zu verbinden.

4. Fahrzeugheiz- und -kühlsystem (20) nach Anspruch 1, ferner mit:
einer Zusatzbatterie (80); und
einem Steuersystem (36), das betreibbar ist, um die Zusatzbatterie (80) mit dem Zusatzverdichter (60) operativ zu verbinden.

5. Fahrzeugheiz- und -kühlsystem (20) nach Anspruch 1, ferner mit:
einer Fahrzeugbatterie (34);
einer Zusatzbatterie (80); und
einem Steuersystem (36), das betreibbar ist, um von Fahrzeugbatterie (34) und Zusatzbatterie (80) mindestens eine mit dem Zusatzverdichter (60) operativ zu verbinden.

6. Fahrzeugheiz- und -kühlsystem (20) nach Anspruch 5, bei dem das Steuersystem (36) einen Trennschalter (74) umfasst, der konfiguriert ist, um die Fahrzeugbatterie (34) von der Zusatzbatterie (80) zu trennen.

7. Fahrzeugheiz- und -kühlsystem (20) nach Anspruch 3, bei dem:
das Fahrzeugheiz- und -kühlsystem (20) ferner ein Fahrzeugladesystem (32) umfasst, das mit einem Fahrzeug-Verbrennungsmotor (30) operativ verbunden ist; und
die Fahrzeugbatterie (34) mit dem Fahrzeugladesystem (32) operativ verbunden ist.

8. Fahrzeugheiz- und -kühlsystem (20) nach Anspruch 4, bei dem:
das Fahrzeugheiz- und -kühlsystem (20) ferner ein Fahrzeugladesystem (32) umfasst, das mit einem Fahrzeug-Verbrennungsmotor (30) operativ verbunden ist; und
die Zusatzbatterie (80) mit dem Fahrzeugladesystem (32) operativ verbunden ist.

9. Fahrzeugheiz- und -kühlsystem (20) nach Anspruch 5, bei dem:
das Fahrzeugheiz- und -kühlsystem (20) ferner ein Fahrzeugladesystem (32) umfasst, das mit einem Fahrzeug-Verbrennungsmotor (30) operativ verbunden ist; und
die Fahrzeugbatterie (34) und die Zusatzbatterie (80) mit dem Fahrzeugladesystem (32) operativ verbunden sind.

10. Fahrzeugheiz- und -kühlsystem (20) nach Anspruch 9, ferner mit:
einem ersten Trennschalter (72), der konfiguriert ist, um die Fahrzeugbatterie (34) von dem Fahrzeugladesystem (32) zu trennen; und
einem zweiten Trennschalter (74), der konfiguriert ist, um die Zusatzbatterie (80) von dem Fahrzeugladesystem (32) zu trennen.

11. Verfahren zum Heizen und Kühlen eines Fahrzeugs (22) mit den Schritten:
Verbinden eines Steuergeräts (70) zwischen einer Fahrzeug-HVAC-Benutzerschnittstelle (50) und einem Zusatzverdichter (60); und
Einrichten einer Steuerventilanordnung (64) zum:
Verbinden des Zusatzverdichters (60) und einer Zusatzverdichterschlange (62) mit einer Fahrzeugverdampferschlange (44) in einem Zusatzmodus; und
Verbinden eines Fahrzeugverdichters (40) und einer Fahrzeugverdichterschlange (42) mit der Fahrzeugverdampferschlange (44) in einem Fahrzeugmodus.

12. Verfahren nach Anspruch 11, ferner mit dem Schritt des operativen Verbindens des Zusatzverdichters (60) mit einer Batterie (34, 80), so dass der Zusatzverdichter (60) nicht mit einem Fahrzeug-Verbrennungsmotor (30) mechanisch verbunden ist.

13. Verfahren nach Anspruch 11, ferner mit dem Schritt des operativen Verbindens mindestens einer Fahrzeugbatterie (34) oder einer Zusatzbatterie (80) mit dem Zusatzverdichter (60).

14. Verfahren nach Anspruch 13, ferner mit den Schritten:
operatives Verbinden eines Fahrzeugladesystems (32) mit einem Fahrzeug-Verbrennungsmotor (30); und
operatives Verbinden der Zusatzbatterie (80) mit dem Fahrzeugladesystem (32).

## Revendications

1. Système de chauffage et de refroidissement de véhicule (20) comprenant :
une bobine d'évaporateur de véhicule (44) ;
une interface utilisateur de HVAC de véhicule (50) ;
un compresseur auxiliaire (60) ;
une bobine de compresseur auxiliaire (62) ;
un compresseur de véhicule (40) ;
une bobine de compresseur de véhicule (42) ; et
un réseau de vannes de commande (64) ; et
un dispositif de commande (70) connecté entre l'interface utilisateur de HVAC de véhicule (50) et le compresseur auxiliaire (60),
dans lequel :
le compresseur auxiliaire (60) et la bobine de compresseur auxiliaire (62) sont connectés à la bobine d'évaporateur de véhicule (44) dans un mode auxiliaire ; et
le compresseur de véhicule (40) et la bobine de compresseur de véhicule (42) sont connectés à la bobine d'évaporateur de véhicule (44) dans un mode de véhicule.

2. Système de chauffage et de refroidissement de véhicule (20) selon la revendication 1, comprenant en outre un moteur à combustion interne de véhicule (30), dans lequel le compresseur auxiliaire (60) n'est pas connecté mécaniquement au moteur à combustion interne de véhicule (30).

3. Système de chauffage et de refroidissement de véhicule (20) selon la revendication 1, comprenant en outre :
une batterie de véhicule (34) ; et
un système de commande (36) configuré pour connecter de manière opérationnelle la batterie de véhicule (34) au compresseur auxiliaire (60).

4. Système de chauffage et de refroidissement de véhicule (20) selon la revendication 1, comprenant en outre :
une batterie auxiliaire (80) ; et
un système de commande (36) configuré pour connecter de manière opérationnelle la batterie auxiliaire (80) au compresseur auxiliaire (60).

5. Système de chauffage et de refroidissement de véhicule (20) selon la revendication 1, comprenant en outre :
une batterie de véhicule (34) ;
une batterie auxiliaire (80) ; et
un système de commande (36) configuré pour connecter de manière opérationnelle au moins l'une de la batterie de véhicule (34) et de la batterie auxiliaire (80) au compresseur auxiliaire (60).

6. Système de chauffage et de refroidissement de véhicule (20) selon la revendication 5, dans lequel le système de commande (36) comprend un commutateur de déconnexion (74) configuré pour déconnecter la batterie de véhicule (34) à partir de la batterie auxiliaire (80).

7. Système de chauffage et de refroidissement de véhicule (20) selon la revendication 3, dans lequel :
le système de chauffage et de refroidissement de véhicule (20) comprend en outre un système de charge de véhicule (32) connecté de manière opérationnelle à un moteur à combustion interne de véhicule (30) ; et
la batterie de véhicule (34) est connectée de manière opérationnelle au système de charge de véhicule (32).

8. Système de chauffage et de refroidissement de véhicule (20) selon la revendication 4, dans lequel :
le système de chauffage et de refroidissement de véhicule (20) comprend en outre un système de charge de véhicule (32) connecté de manière opérationnelle à un moteur à combustion interne de véhicule (30) ; et
la batterie auxiliaire (80) est connectée de manière opérationnelle au système de charge de véhicule (32).

9. Système de chauffage et de refroidissement de véhicule (20) selon la revendication 5, dans lequel :
le système de chauffage et de refroidissement de véhicule (20) comprend en outre un système de charge de véhicule (32) connecté de manière opérationnelle à un moteur à combustion interne de véhicule (30) ; et
la batterie de véhicule (34) et la batterie auxiliaire (80) sont connectées de manière opérationnelle au système de charge de véhicule (32).

10. Système de chauffage et de refroidissement de véhicule (20) selon la revendication 9, comprenant en outre :
un premier commutateur de déconnexion (72) configuré pour déconnecter la batterie de véhicule (34) à partir du système de charge de véhicule (32) ; et
un second commutateur de déconnexion (74) configuré pour déconnecter la batterie auxiliaire (80) à partir du système de charge de véhicule (32).

11. Procédé de chauffage et de refroidissement d'un véhicule (22) comprenant les étapes consistant à :
connecter un dispositif de commande (70) entre une interface utilisateur de HVAC de véhicule (50) et un compresseur auxiliaire (60) ; et
agencer un réseau de vannes de commande (64) pour :
connecter le compresseur auxiliaire (60) et une bobine de compresseur auxiliaire (62) à la bobine d'évaporateur de véhicule (44) dans un mode auxiliaire ; et
connecter un compresseur de véhicule (40) et une bobine de compresseur de véhicule (42) à la bobine d'évaporateur de véhicule (44) dans un mode de véhicule.

12. Procédé selon la revendication 11, comprenant en outre l'étape consistant à connecter le manière opérationnelle le compresseur auxiliaire (60) à une batterie (34, 80) de telle sorte que le compresseur auxiliaire (60) ne soit pas connecté mécaniquement à un moteur à combustion interne de véhicule (30).

13. Procédé selon la revendication 11, comprenant en outre l'étape consistant à connecter de manière opérationnelle d'au moins l'une d'une batterie de véhicule (34) et d'une batterie auxiliaire (80) au compresseur auxiliaire (60).

14. Procédé selon la revendication 13, comprenant en outre les étapes consistant à :
connecter de manière opérationnelle un système de charge de véhicule (32) à un moteur à combustion interne de véhicule (30) ; et
connecter de manière opérationnelle la batterie auxiliaire (80) au système de charge de véhicule (32).
